# EUROPÄISCHE PATENTSCHRIFT

(11) **EP 1 293 758 B1**
(45) Veröffentlichungstag und Bekanntmachung des Hinweises auf die Patenterteilung: **05.05.2010**
(21) Anmeldenummer: 02018094.9
(22) Anmeldetag: 13.08.2002
(51) Int. Cl.: G01D 5/38, G02B 5/04, G02B 5/18

(54) **Massverkörperung für Positionsmesssysteme**
Measuring body for position measuring systems
Corps de mesure pour des systèmes de mesure de position

(30) Priorität: 12.09.2001 DE 10144927
(43) Veröffentlichungstag der Anmeldung: 19.03.2003
(73) Patentinhaber: Dr. Johannes Heidenhain GmbH, 83301 Traunreut (DE)
(72) Erfinder: Freitag, Hans-Joachim, Dr., 07749 Jena (DE); Franz, Heinz-Günther, 22359 Hamburg (DE); Schmidt, Andreas, 99089 Erfurt (DE)
(74) Vertreter: Geyer, Fehners & Partner

(56) Entgegenhaltungen:
- DE-A- 2 714 324
- DE-A- 4 006 789
- US-A- 5 696 584

## Beschreibung

Die Erfindung bezieht sich auf eine Maßverkörperung für Positionsmeßsysteme, die als Amplitudengitter ausgebildet ist und eine Meßteilungsstruktur aufweist, die Hellfeldbereiche umfaßt, in denen an der Maßverkörperung eingestrahlte Strahlung austritt, und Dunkelfeldbereiche, an denen eingestrahlte Strahlung nicht austritt, wobei die Hellfeldbereiche oder die Dunkelfeldbereiche in einer Ebene liegen. Die Erfindung bezieht sich weiter auf die Herstellung einer solchen Maßverkörperung.

Maßverkörperungen für photoelektrische Positionsmeßeinrichtungen, z.B. Maßstäbe oder Teilscheiben, zur Längen- oder Winkelmessung bestehen bevorzugt aus einem Teilungsträger als Grundkörper, auf dem eine Meßteilungsstruktur aufgebracht ist. Diese Meßteilungsstruktur wird von geeigneten Abtasteinheiten zur Erzeugung von verschiebungsabhängigen modulierten Signalen abgetastet, was je nach optischem Abtastprinzip im Durchlicht- oder im Auflichtverfahren erfolgen kann. In der Fachzeitschrift "F&M Feinwerktechnik und Meßtechnik, Jg. 88, Heft 7, S. 333-388" sind eine Reihe von Vorteilen der Auflichtmeßsysteme beschrieben. Der Hauptvorteil gegenüber den Durchlichtmeßsystemen besteht vor allem in der einfachen, kostengünstigen und robusten Montage.

Je nach dem zu erzielenden Informationsgehalt kann man eine Vielzahl von Strukturformen bzw. Codierungsformen unterscheiden. Typisch sind reine Inkrementalstrukturen mit oder ohne Referenzmarken oder Absolutcode-Strukturen in paralleler oder serieller Anordnung.

Weiter sind unterschiedlich ausgebildete Meßteilungen bekannt. Es können Amplituden-Meßteilungsstrukturen, Phasen-Meßteilungsstrukturen, Lichtbeugungs-Meßteilungsstrukturen oder auch Mischformen daraus verwendet werden. Die DE 196 39 499 A1 und DE 195 02 727 A1 schildern, daß Phasengitter gegenüber Amplitudengittern eine höhere Modulation erlauben. Übliche Phasengitter weisen ein Stufengitter auf. Diese Druckschriften gehen auch auf verschiedene Herstellverfahren zur Erzeugung der Stufengitter ein. Wie leicht zu erkennen ist, bringen alle diese Verfahren eine sehr aufwendige und damit teure Herstellung mit sich.

Zum überwiegenden Teil werden deshalb die technisch einfacheren Amplitudengitter verwendet. In der EP 0160 784 wird ein Verfahren zur photolithografischen Herstellung eines Amplitudengitters beschrieben. Dieses ist zwar im Vergleich zu Phasengittern kostengünstiger, erfordert aber ebenfalls eine Vielzahl von sehr teuren Spezialtechnologien und Spezialgeräten. Auch ist dieses Gitter nur zum Auflichteinsatz geeignet.

Die technologischen Grundlagen zur Erzeugung von Meßteilungen mittels photolithografisch strukturierten Metalldünnschichtsystemen, bevorzugt auf Glasteilungsträgern, wie sie heute sehr verbreitet für Präzisionsmeßteilungen im Durchlichtverfahren eingesetzt werden und im Prospekt "Winkelmeßsysteme" der Firma Heidenhain vom September 1997 beschrieben sind, gehen bis weit in die 60-iger und 70-ger Jahre zurück und haben sich nur wenig verändert. Auch hier gilt, daß diese Herstellverfahren sehr aufwendig und teurer sind.

Etwas weniger aufwendig sind Meßteilungen als Amplitudengitter, die auf Basis von Photoemulsionen auf Polyesterfilm hergestellt werden, wie in der Produktübersicht 2001 der Firma PWB technologies beschrieben. Diese Meßteilungen sind jedoch entweder, wenn als Basismaterial (Teilungsträger) klassisches Filmmaterial in Folienform verwendet wird, nur für niedrige Genauigkeitsansprüche verwendbar oder, wenn als Basismaterial Photoplatten aus Glas verwendet werden, sehr teuer.

Ausgehend hiervon liegt der Erfindung die Aufgabe zugrunde, eine Maßverkörperung der eingangs genannten Art und ein Verfahren zu deren Herstellung so auszubilden, daß bei kostengünstiger Herstellung die Tauglichkeit für Präzisionsanwendungen gegeben ist.

Erfindungsgemäß wird dies bei einer gattungsgemäßen Maßverkörperung dadurch erreicht, daß die Strahlung, die auf Dunkelfeldbereiche oder Hellfeldbereiche trifft, durch mindestens eine Fläche reflektiert wird, die an der Maßverkörperung ausgebildet ist und zu der Ebene der Hellfeld- bzw. Dunkelfeldbereiche geneigt ist. Das erfindungsgemäße Konzept sieht also mindestens eine geneigte Fläche vor, die auf die Hell- oder Dunkelfeldbereiche fallende Strahlung umlenkt. Die erfindungsgemäße Maßverkörperung kann dabei sowohl im Auflicht- als auch im Durchlichtverfahren betrieben werden.

Im Durchlichtverfahren wird in den Hellfeldbereichen an der Maßverkörperung eingestrahlte Strahlung transmittiert, so daß dies Strahlung für einen entsprechenden Detektor zu hell leuchtend wahrnehmbaren Flächen führt. In den Dunkelfeldbereichen erfolgt dagegen keine Transmission, so daß diese für den Detektor dunkel erscheinen. Im Auflichtverfahren sind die Verhältnisse genau umgekehrt; nur in den Hellfeldbereichen wird die Strahlung zum Detektor zurückreflektiert, wogegen in den Dunkelfeldbereichen keine Rückreflexion, sondern z. B. eine Transmission der Strahlung erfolgt.

Das Durchlichtverfahren hat anwendungstechnische Vorteile, da dort regelmäßig der Kontrast zwischen Hellfeld- und Dunkelfeldbereichen größer ist, wodurch eine größere Modulationstiefe erzielt werden kann. Nachteilig beim Durchlichtverfahren ist allerdings das Erfordernis einer Zugänglichkeit der Maßverkörperung im Bereich des Positionsmeßsystems von gegenüberliegenden Seiten. Diesbezüglich ist das Auflichtverfahren einfacher anzuwenden. Die erfindungsgemäße Maßverkörperung ist für beide Verfahren gleichermaßen tauglich, so daß der Vorteil einer guten Anpaßbarkeit an die jeweiligen Anwendungserfordemisse gegeben ist.

In nachfolgender Beschreibung der Erfindung sowie ihrer Vorteile wird, soweit explizit nichts anderes angegeben ist, vom Einsatz der Maßverkörperung im Durchlichtverfahren ausgegangen.

Die Erfindung bietet zwei unterschiedliche Wirkungsprinzipien der geneigten Fläche: in einer ersten Möglichkeit dient die geneigte Fläche dazu, einen oder mehrere Dunkelfeldbereich(e) zu erzeugen, der/die zusammen mit weiteren Hellfeldbereichen die Meßteilungsstruktur der Maßverkörperung bildet/bilden. Nach einer zweiten Möglichkeit bewirkt die geneigte Fläche, daß die auf einer Einstrahlungsseite auf die Maßverkörperung gerichtete Strahlung innerhalb der Maßverkörperung umgelenkt wird, so daß sie nicht auf einer der Einstrahlungsseite gegenüberliegenden Ausstrahlungsseite ausgestrahlt werden kann. Diese zweite Möglichkeit wird weiter unten beschrieben.

Gemäß dem ersten Wirkungsprinzip der geneigten Fläche dient bei einer Maßverkörperung im Durchlichtverfahren diese zur Erzeugung eines Dunkelfeldbereichs, in dem sie die auf die Einstrahlungsseite der Maßverkörperung gerichtete Strahlung so umleitet, daß sie nicht auf der der Detektionseinrichtung zugewandten Ausstrahlungsseite austritt. In diesem Bereich wird somit keine Strahlung transmittiert, es entsteht also ein Dunkelfeldbereich. Dort dagegen, wo keine geneigte Fläche an der Maßverkörperung vorgesehen ist, wird die Strahlung zur Ausstrahlungsseite transmittiert, es besteht also auf der Ausstrahlungsseite der Maßverkörperung ein Hellfeldbereich.

Das gleiche Prinzip kann ebenso für eine Maßverkörperung verwendet werden, die im Auflichtverfahren eingesetzt wird: da, wie erwähnt, im Auflichtverfahren die Strahlungsquelle und die Detektionseinheit auf der gleichen Seite der Maßverkörperung liegen, wirken nun die Bereiche, in denen Strahlung nicht zur Detektionsseite zurückgelenkt wird, sondern durch die Maßverkörperung hindurchtritt, als Dunkelfeldbereiche. Ein Hellfeldbereich ist im Auflichtverfahren dort gebildet, wo geneigte Flächen so zusammenwirken, daß sie die auf die Maßverkörperung gerichtete Strahlung zur Detektionseinheit umlenken. Damit wirken in Umkehrung des Prinzips für das Durchlichtverfahrens beim Auflichtverfahren die geneigten Flächen zur Erzeugung der Hellfeldbereiche.

Eine Reflexion an der geneigten Fläche kann auf unterschiedliche Weise erzielt werden. So ist es möglich, die geneigte Fläche reflektiv zu beschichten, z.B. mit einer Chromdünnfilmauflage. Einen wesentlich geringeren Aufwand bedeutet es jedoch, für die Reflexion den Brechzahlunterschied zwischen dem Material der Maßverkörperung und der sie umgebenden Luft zu nutzen und die geneigte Fläche zur Totalreflektion der Strahlung auszubilden. Damit läßt sich ein Bearbeitungsgang für das Aufbringen einer Dünnfilmauflage einsparen und somit die Herstellung der Maßverkörperung verbilligen.

Für eine einfache Herstellung vor allem unterschiedlicher Abmessungen der Hell- und Dunkelfeldbereiche einer Maßverkörperung erweist es sich als günstig, wenn die geneigte Fläche als Grenzfläche einer Vertiefung an der Maßverkörperung gestaltet ist. Auf diese Weise kann mit einfachen Mitteln eine hohe Genauigkeit der Meßteilungsstruktur erzielt werden, weil die Bearbeitung der Maßverkörperung auf einfache Weise mit mechanischen Werkzeugen in hoher Präzision beherrschbar ist. Aufwendige Lithographieschritte können entfallen.

Dabei sind verschiedene Formen von Vertiefungen in der Maßverkörperung vorstellbar, solange die geneigte Fläche ihre eingangs geschilderte Funktion erfüllen kann. Vorteilhafterweise wird die geneigte Fläche durch eine V-förmige Vertiefung ausgebildet, weil so auf einfache Weise Grenzflächen zweier Materialen mit großem Brechzahlunterschied geschaffen sind, so daß Totalreflexion möglich ist, die besonders guten Kontrast zwischen Hell- und Dunkelfeldbereichen bietet.

Die oben beschriebene Anordnung einer V-förmigen Vertiefung erreicht in einer Weiterbildung der Erfindung weiter, daß in einem Bearbeitungsschritt Paare von zur Reflexion nutzbaren geneigten Flächen hergestellt werden können, die als Prismenstruktur wirken. Es ist daher unter Fertigungsgesichtspunkten zu bevorzugen, geneigte Flächen an Grenzflächen von V-förmigen Vertiefungen in der Maßverkörperung zu bilden, die Prismenstruktur aufweisen.

Die Bereiche mit geneigten Flächen und die Bereiche der in einer Ebene liegenden Felder, die aneinandergereiht die Meßteilungsstruktur der Maßverkörperung bilden, werden im allgemeinen bei Inkrementalsystemen gleiche Abmessungen haben. Sie können aber auch unterschiedliche Abmessungen aufweisen, z. B. um Referenzmarken zu erzeugen. Eine Größenvariation eines durch geneigte Flächen begrenzten Bereiches läßt sich dadurch erzeugen, daß die V-förmigen Vertiefungen mit entsprechender Tiefe in das Material der Maßverkörperung eingeschnitten werden. Alternativ dazu lassen sich die Bereiche mit geneigten Flächen auch dadurch vergrößern, daß mehrere V-förmige Vertiefungen direkt aneinander anschließend angeordnet sind, so daß sich an der Oberfläche der Maßverkörperung in der Längsansicht quer zur Bestrahlungsrichtung gesehen ein Zickzackprofil ergibt.

Durch das Einschneiden einer V-förmige Vertiefung konstanter Tiefe in die Maßverkörperung ergeben sich auf der Oberfläche der Maßverkörperung parallele Begrenzungslinien zwischen dem Bereich der geneigten Flächen und dem anschließenden in einer Ebene liegenden Feld. Für eine scheibenförmige Maßverköperung zur Winkelmessung werden jedoch Hell- und Dunkelfeldbereiche mit radial verlaufenden Begrenzungslinien benötigt, um radiusunabhängig gleiche Tastverhältnisse zwischen den Hell- und Dunkelfeldern zu erhalten. Dies wird erreicht, indem V-förmige Vertiefungen mit zum Mittelpunkt der scheibenförmigen Maßverköperung hin abnehmender Tiefe eingearbeitet werden.

Auf diese Weise lassen sich bei scheibenförmigen ebenso wie bei linearen Maßverkörperungen sowohl Referenzmarken als Hell- oder Dunkelfeldbereiche mit gegenüber den übrigen Bereichen abweichenden Abmessungen erzeugen, als auch eine Absolutcodierung, bei der z. B. mehrere Spuren mit Hell- und Dunkelfeldbereichen nebeneinander angeordnet sind.

Um eine Verschmutzung der strukturierten Oberfläche der Maßverkörperung zu vermeiden, ist es vorzuziehen, diese mit einer zusätzlichen Schicht abzudecken. Damit wird vermieden, daß sich Schmutzpartikel wie z. B. Wasser- oder Öltröpfchen oder Wasserdampf, anlagern. Ein solcher Schutz ist vorteilhaft, da er eine Veränderung der Brechungsverhältnisse an der Oberfläche der geneigten Flächen verhindert, was eine Totalreflexion stören könnte.

In einer Weiterbildung kann die Oberfläche so ausgebildet werden, daß sich eine ebene Oberfläche ergibt, die vorteilhafterweise weniger schnell verschmutzt als eine strukturierte und darüber hinaus leicht zu reinigen ist. Zweckmäßigerweise wird eine derartige Planarisierung der Oberfläche dadurch erzielt, daß die Vertiefungen der Maßverkörperung mit Paßstücken gefüllt sind, die gegenüber dem Material der Maßverkörperung einen deutlichen Brechzahlunterschied aufweisen können. Auf diese Weise wird zum einen für eine ebene Oberfläche gesorgt und zum anderen ist sichergestellt, daß die Totalreflexion an den geneigten Flächen der Vertiefungen in der Maßverkörperung immer erhalten bleibt. Alternativ können die geneigten Flächen mit einer Beschichtung versehen sein, z.B. einem lichtdichten Optiklack oder einer Chrombeschichtung, oder zwischen den geneigten Flächen ein Luftspalt sichergestellt sein, bevor die Passstücke eingefügt werden, damit die Totalreflexion unabhängig vom Material der Paßstücke gewährleistet ist.

Für eine lange Lebensdauer einer Maßverkörperung ist es wünschenswert, daß das Material der Maßverkörperung möglichst stabil und fest ist. Dasselbe gilt hinsichtlich der Maßhaltigkeit. Andererseits ist es für eine mechanische Bearbeitung vorteilhaft, ein leicht verarbeitbares und daher weiches Material zu verwenden. Diese an und für sich gegenläufigen Anforderungen können mit einer Maßverkörperung erreicht werden, die aus einem Teilungsträger besteht, der aus einem thermisch und/oder mechanisch stabilen Werkstoff, z.B. Glas, und einem die Meßteilungsstruktur aufweisenden Meßteilungskörper aus Kunststoff gebildet ist. Dadurch entsteht eine Verbund-Maßverkörperung.

Weil Meßteilungsstrukturen im Durchlichtverfahren einerseits aufgrund größerer Kontraste zwischen Hell- und Dunkelfeldbereichen eine höhere Ablesegenauigkeit ermöglichen, andererseits das Durchlichtverfahren durch die Notwendigkeit einer beidseitigen Zugänglichkeit der Maßverkörperung weniger vorteilhaft einsetzbar ist, als eine Positionsmeßeinrichtung nach dem Auflichtverfahren, ist es wünschenswert, die Vorteile beider Verfahren miteinander zu kombinieren. Hierfür wird vorteilhafterweise das eingangs erwähnte zweite Wirkungsprinzip der geneigten Fläche an der Maßverkörperung ausgenutzt. Eine derartige Maßverkörperung weist eine zur Einstrahlung von Strahlung vorgesehene Einstrahlungsfläche und eine zur Detektion der eingestrahlten Strahlung vorgesehe Detektionsfläche auf, wobei Einstrahlungs- und Detektionsfläche auf einander nicht gegenüberliegenden Seiten der Maßverkörperung liegen und wobei die geneigte Fläche für eine Strahlungsumlenkung von der Einstrahlungsfläche zur Detektionsfläche ausgebildet ist.

Auf diese Weise wird eine Anordnung ermöglicht, in der die Meßteilungsstruktur im Durchlichtbetrieb arbeitet, aber dennoch Einstrahlung und Detektion nicht auf gegenüberliegenden Flächen der Maßverkörperung liegen müssen. Z. B. kann ein Einstrahlungswinkel auf bzw. Ausstrahlungswinkel von der geneigten Fläche von z.B. 45° gewählt werden, so daß die Bestrahlungsquelle und die Detektionseinheit in einem Winkel von 90° zueinander orientiert sind.

In einer derart aufgebauten Maßverkörperung liegen vorteilhafterweise auch im Durchlichtverfahren Beleuchtungseinheit und Detektionseinheit nicht einander gegenüber. Die Maßverkörperung muß nicht mehr von zwei gegenüberliegenden Seiten her zugänglich sein.

Die Meßteilungsstruktur kann, wenn dies für eine Anwendung zweckmäßig ist, im Bereich der Einstrahlungsfläche liegen. Vorteilhafterweise wird die Meßteilungsstruktur jedoch im Bereich der Detektionsfläche angeordnet. Dadurch wird eine höhere Ablesegenauigkeit erreicht, weil die Meßteilungsstruktur sich näher an der Detektionseinheit befindet und Streuungen bei der Umlenkung der Strahlung vermieden werden.

Die Forderung nach hoher Maßgenauigkeit durch geringe mechanische und temperaturbedingte Längenänderung verlangt insbesondere bei Maßstäben großer Länge nach einem großen mechanischen Elastizitätsmodul des für sie gewählten Werkstoffs. Andererseits ist vor allem im Interesse einer leichten Herstellbarkeit der Maßverkörperung ein leicht verarbeitbarer Werkstoff mit geringem mechanischem Elastizitätsmodul, wie zum Beispiel Kunststoff, wünschenswert. Um diesen gegensätzlichen Anforderungen gerecht zu werden, wird eine Meßteilungsstruktur mit hoher Genauigkeit aus Glas und ein Teilungsträger aus optisch transparentem Kunststoff hergestellt, vorzugsweise aus Polyamid. Dabei kann ein kostengünstiges Strangpreßprofil in großen Längen verwendet werden, das ein geringes Eigengewicht hat. Um dem Maßstab dennoch geringe Temperaturanfälligkeit und hohe mechanische Belastbarkeit zu verleihen, kann zusätzlich der Teilungsträger mit einem Aufnahmeprofil, z. B. aus Stahl, verklebt sein. Um weiter eine Verbesserung des Lichtübergangs zwischen Teilungsträger und Meßteilungskörper zu erreichen, kann der Meßteilungskörper in eine Nut im Teilungsträger eingesetzt sein, in die eine nichtflüchtige Immersionsflüssigkeit eingebracht ist.

Die Aufgabe der Erfindung wird zudem gelöst durch ein Verfahren zur Herstellung einer Maßverkörperung für Positionsmeßsysteme, das als Amplitudengitter ausgebildet ist und eine Meßteilungsstruktur aufweist, die Hellfeldbereiche aufweist, in denen an der Maßverkörperung eingestrahlte Strahlung austritt, und Dunkelfeldbereiche, an denen eingestrahlte Strahlung nicht austritt, wobei die Hellfeldbereiche oder die Dunkelfeldbereiche in einer Ebene liegen, und wobei die Strahlung, die auf Hellfeldbereiche oder Dunkelfeldbereiche trifft, durch mindestens eine Fläche reflektiert wird, die an der Maßverkörperung ausgebildet ist und zu der Ebene der Hellfeld- oder Dunkelfeldbereiche geneigt ist, wobei die Maßverkörperung durch Spritzgießen, Extrusion, Heiß- oder Kaltprägen oder mittels Gußtechnik hergestellt wird. Alle diese Herstellungsverfahren bieten eine kostengünstige Möglichkeit, die geneigten Flächen an der Maßverkörperung zu erzeugen, weil sie entweder in einer Gußform für die Maßverkörperung vorgesehen werden können oder mit hoher Präzision durch gut beherrschbare mechanische Bearbeitung an der Maßverkörperung ausgebildet werden können.

Eine besonders kostengünstige Herstellungsweise besteht darin, nach einem der vorgenannten Herstellungsverfahren zuerst einen Meßteilungskörper zu erzeugen und diesen mit einem Teilungsträger aus einem mechanisch und/oder thermisch stabilen Werkstoff fest zu verbinden. Durch diese Verbundbauweise der Maßverkörperung ist es z.B. möglich, eine einfach herstellbare Meßteilungsstruktur mit einem besonders widerstandfähigen und maßhaltigen Teilungsträger zu verbinden, um die Vorteile beider Materialien auszunutzen.

Die Erfindung wird nachfolgend anhand der Zeichnung im Prinzip beispielshalber noch näher erläutert. Es zeigen:
- Fig. 1: einen Querschnitt durch eine Prinzipdarstellung einer Meßanordnung zur Durchlichtpositionsmessung mit einer erfindungsgemäßen Meßteilung;
- Fig. 2: einen Querschnitt durch eine Prinzipdarstellung eines erfindungsgemäßen Maßstabes mit einer inkrementalen Meßteilung;
- Fig. 3: eine Draufsicht auf einen Maßstab mit einer inkrementalen Meßteilung;
- Fig. 4: einen Querschnitt durch eine Prinzipdarstellung eines erfindungsgemäßen Maßstabes mit einer Referenzmarkenstruktur;
- Fig. 5: eine Draufsicht auf einen Ausschnitt eines Maßstabes mit einer Referenzmarkenstruktur;
- Fig. 6: eine Draufsicht auf einen Ausschnitt eines Maßstabes mit einer absoluten Meßteilung in mehreren Meßspuren;
- Fig. 7a und 7b: einen Querschnitt und eine Draufsicht auf einer Teilscheibe mit keilförmigen Teilungsmarken;
- Fig. 8: einen Querschnitt durch eine Prinzipdarstellung eines Maßstabes der aus einem festen Glas-Kunststoffverbund besteht;
- Fig. 9: einen Querschnitt durch eine Prinzipdarstellung eines Maßstabes bei dem die trapezförmigen Teilungsmarkenstrukturen planarisiert sind;
- Fig. 10: eine Prinzipdarstellung einer Positionsmeßeinrichtung mit einem erfindungsgemäßen Maßstab, dessen Meßteilungsstrukturen im Durchlicht abgetastet werden, wobei die Beleuchtung und Abtastung von einer Seite erfolgen;
- Fig. 11: einen Querschnitt durch einen stranggezogenen Teilungsträger mit Strahlumlenkung und Glasträger, und

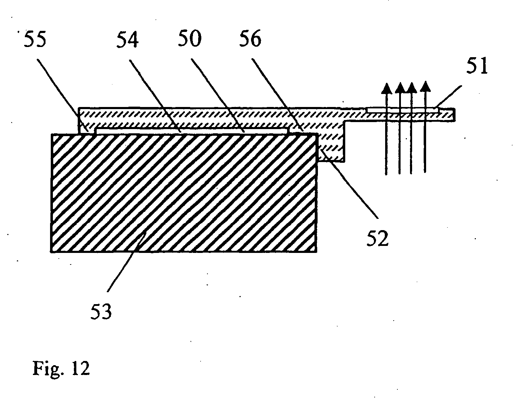

- Fig. 12: einen Querschnitt durch einen transparenten Teilungsträger mit integrierten Montageelementen.

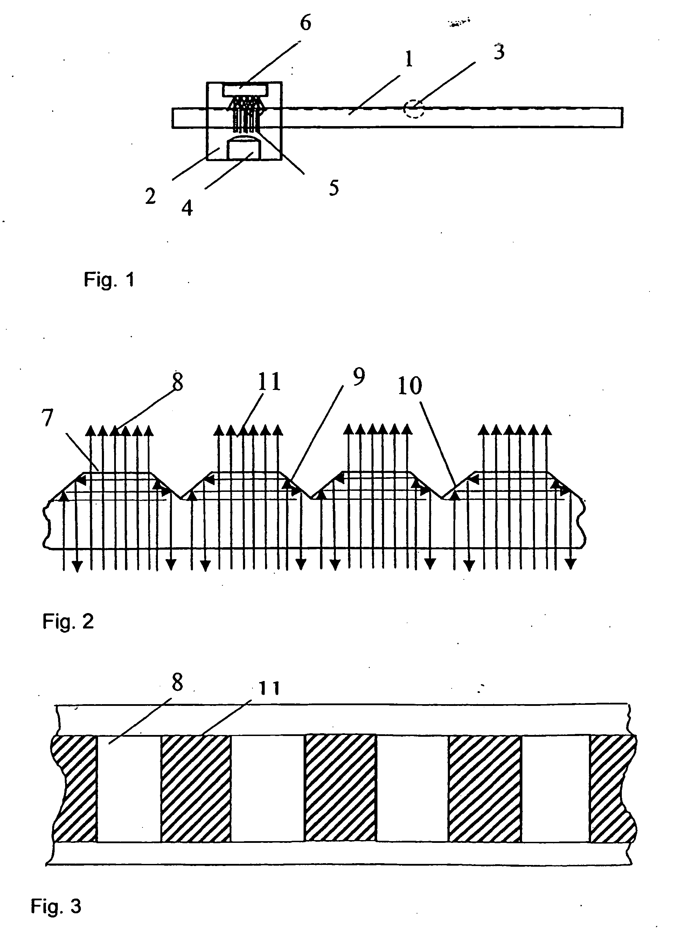

In Fig. 1 ist in einer schematischen Darstellung eine Positionsmeßeinrichtung nach dem Durchlichtprinzip mit einer Maßverkörperung in der Form eines Maßstabs gezeigt, soweit sie für die Darstellung der Erfindung erforderlich ist. Die Positionsmeßeinrichtung umfaßt einen Maßstab 1 mit einem transparenten Teilungsträger, der eine Meßteilungsstruktur 3 aufweist, die ein Abtastkopf 2 im Durchlichtverfahren abtastet. Die Meßteilungsstruktur 3 hat Hell- und Dunkelfeldbereiche, deren Aufbau später noch erläutert wird.

Der Abtastkopf 2 weist eine Beleuchtungseinheit 4, welche im Durchlichtverfahren von einer Beleuchtungsseite her weitgehend paralleles Licht 5 auf den Maßstab 1 aussendet, und eine Detektionseinheit 6 auf, die die Meßteilungsstruktur 3 auf der der Beleuchtungsseite gegenüberliegenden Seite des Maßstabs 1 abtastet. Die Meßteilungsstruktur 3 ist als inkrementale Rasterteilung ausgebildet.

Die Einzelheiten der Meßteilungsstruktur 3 für den Einsatz im Durchlichtverfahren sind in einer prinzipiellen Darstellung in Fig. 2 gezeigt. Bei der inkrementalen Meßteilungsstruktur 3, die auch als Rasterstruktur bezeichnet wird, haben Hellfeldbereiche 8, die von in einer Ebene liegenden, waagrecht dargestellten Feldern 7 gebildet werden, etwa die gleiche Größe wie Dunkelfeldbereiche 11. Die Dunkelfeldbereiche 11 werden von totalreflektierenden und gegenüber der Ebene der waagrecht Felder 7 geneigten Flächen 9 und 10 erzeugt. Das Licht 5, das von der Beleuchtungsseite her auf die waagrechten Felder 7 der Hellfeldbereiche 8 trifft, kann ungehindert hindurchtreten. Auf der der Beleuchtungseinheit abgewandten Detektorseite leuchten Hellfeldbereiche 8 daher. In den Bereichen der geneigten Flächen 9 und 10 dagegen wird das von der Beleuchtungsseite her auftreffende Licht totalreflektiert und somit am Durchtritt durch den Maßstab 1 gehindert. Zwei benachbarte geneigte Flächen 9 und 10 bilden dabei eine Prismenstruktur, die so dimensioniert ist, daß an jeder geneigten Fläche 9 bzw. 10 das einfallende Licht um 90° abgelenkt wird.

Das an der Beleuchtungsseite eingestrahlte parallele Licht 5 wird an den jeweils korrespondierenden geneigten Flächen 9 bzw. 10 der Prismenstruktur innerhalb der Meßteilungsstruktur 3 zweimal um 90° reflektiert und somit wieder zur Beleuchtungsseite zurückgeworfen. Es gelangt nicht zur Detektorseite. Damit entstehen auf der der Beleuchtungsseite gegenüberliegenden Detektorseite im Durchlichtbetrieb nichtleuchtende Dunkelfeldbereiche 11, wie auch in Fig. 3 dargestellt.

Die Abfolge von Hell- und Dunkelfeidbereichen bildet die Messteilungsstruktur 3. Fig. 3 zeigt diese inkrementale Meßteilungsstruktur 3 im Durchlichtverfahren von der Detektorseite betrachtet mit den leuchtenden Hellfeldbereichen 8 und den nichtleuchtenden und daher schraffiert dargestellten Dunkelfeldbereichen 11. Die daraus auf der Detektorseite gewinnbaren optischen Abtastsignale werden in üblicher (nicht dargestellter) Weise über Photodioden und weitere elektrische Bauelementen in elektrische Signale umgewandelt, die zur Auswertung einer Steuerungseinheit oder einem Zähler zugeleitet werden.

Verwendet man als Material für den Maßstab 1 Polyamid, so gewährleisten die gegenüber der Ebene der waagrechten Flächen 7 unter einem Winkel von 45° geneigten Flächen 9 und 10 für den Lichtweg innerhalb des Materials die erforderliche Totalreflexion. Dann müssen die Prismenstrukturen nicht zusätzlich mit einer Reflexionsschicht versehen werden. Durch die Totalreflexion sind gute Reflexionsverhältnisse erreicht, daß ein hoher Kontrast zwischen den Hellfeldbereichen 8 und den Dunkelfeldbereichen 11 der Meßteilungsstruktur 3 erzielt wird. Ein weiterer wesentlicher Vorteil dieser Anordnung besteht darin, daß der Maßstab 1 mit seiner Meßteilungsstruktur 3 sehr kostengünstig, beispielsweise durch Spritzgießen oder Prägen, hergestellt werden kann.

Der Maßstab 1 kann auch im Auflichtverfahren verwendet werden. Damit ist die Abtasteinheit auf derselben Seite des Maßstabs wie die Beleuchtungseinheit angeordnet. Während nun das im Bereich der geneigten Flächen eingestrahlte parallele Licht zur Beleuchtungs- und Abtasteinheit reflektiert wird und damit die geneigten Flächen 9 und 10 die Hellfeldbereiche bilden, tritt das eingestrahlte Licht im Bereich der waagrechten Felder 7 durch den Maßstab hindurch. Die Felder 7 sind deshalb die Dunkelfeldbereiche. Damit kann derselbe Maßstab sowohl im Durchlicht- als auch im Auflichtverfahren eingesetzt werden, wobei lediglich Hell- und Dunkelfelder wechseln.

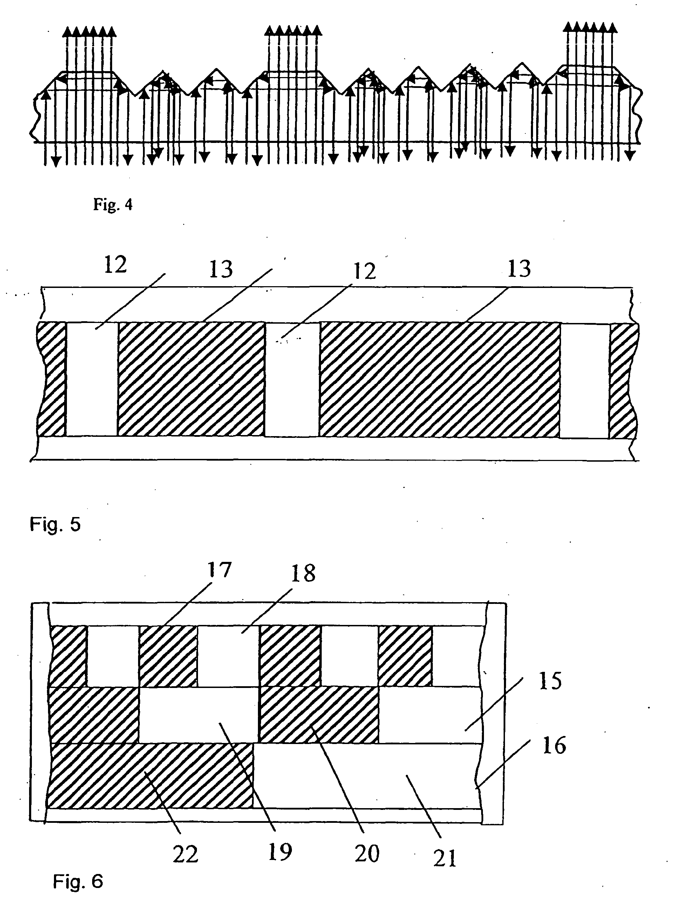

In Fig. 4 ist eine Meßteilungsstruktur in einer Schnittansicht mit Referenzmarken gezeigt. Solche Referenzmarken zeichnen sich dadurch aus, daß die ansonsten konstante Länge der Hellfeldbereiche 12 und Dunkelfeldbereiche 13 variiert. Die Referenzmarke, die im Ausführungsbeispiel der Fig. 4 mit doppelter Länge durch einen Dunkelfeldbereich dargestellt ist, wird dadurch erzeugt, daß für diesen Dunkelfeldbereich die doppelte Anzahl an Prismenstrukturen, verglichen mit den übrigen Dunkelfeldbereichen, direkt aneinanderstoßend angeordnet sind.

Fig. 5 zeigt die Meßteilungsstruktur der Fig. 4 im Durchlichtbetrieb von der Detektorseite mit den leuchtenden Hellfeldbereichen 12 und den nichtleuchtenden Dunkelfeldbereichen 13, wobei der längere Dunkelfeldbereich 13 (rechts in Fig. 5) eine Referenzmarke bildet.

In Fig. 6 sind die Meßteilungsstrukturen für einen absolutcodierten Maßstab im Durchlicht dargestellt. Absolutspuren 14 zu 15 und 15 zu 16 sind jeweils mit einem Steg/Lückenverhältnis von 1:2 ausgeführt. Diese Spuren bewirken eine binäre Codierung, die eine absolute Lageinformation liefert.

Die Dunkelfeldbereiche 17 sind durch Prismenstrukturen analog Fig. 2 realisiert. Sie haben wie die Hellfeldbereiche 18 eine Basislänge von 20 µm. Die Absolutspur 15 mit den gegenüber der Absolutspur 14 doppelt so langen Hellfeldbereichen 19 und Dunkelfeldbereichen 20 ist dadurch erzeugt, daß die Hellfeldbereiche 19 jeweils 40 µm lang sind. Für die Dunkelfeldbereiche 20 sind jeweils zwei identische 45° Prismenstrukturen aneinandergereiht so angeordnet, daß auch die Dunkelfeldbereiche 20 eine Länge von 40 µm haben.

Für die Absolutspur 16 sind jeweils Hellfeldbereiche 21 mit einer Länge von 80 µm angeordnet und dazwischen jeweils vier Prismenstrukturen von 20 µm Basislänge aneinandergereiht, so daß auch die Dunkelfeldbereiche 22 eine Länge von 80 µm aufweisen.

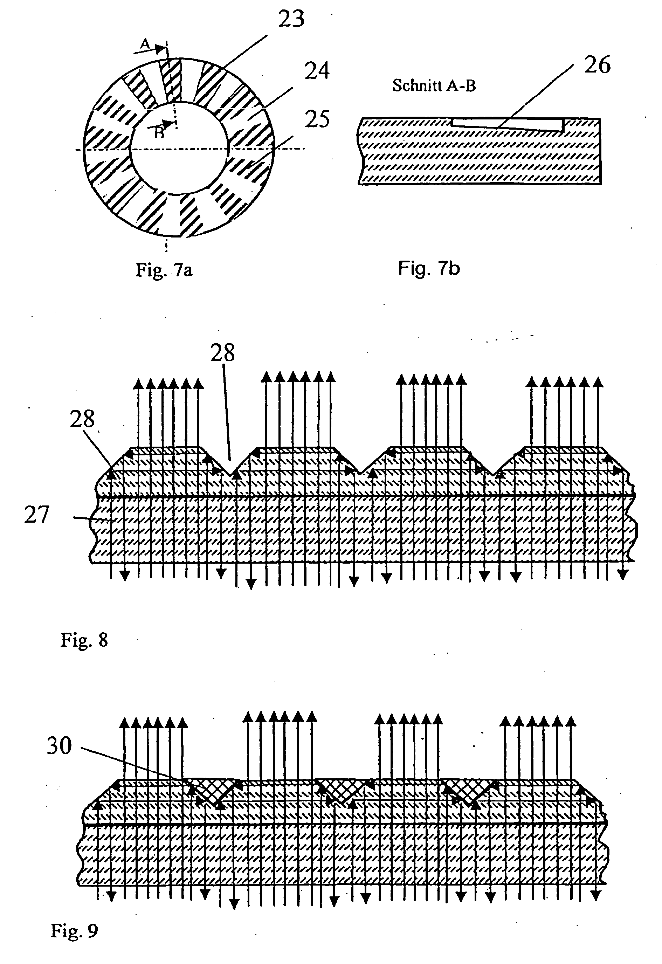

Die Fig. 7a und 7b zeigen Maßverkörperung zur Winkelmessung in Form einer Codescheibe 23 mit einer Meßteilungsstruktur als Kreisteilungen. Fig. 7a ist eine Draufsicht auf die Codescheibe 23 aus optisch transparenten Kunststoff, z.B. aus Polyamid, mit Hellfeldbereichen 24 und Dunkelfeldbereichen 25. Um unabhängig vom Radius gleiche Tastverhältnisse zwischen den Hellfeldbereichen 24 und Dunkelfeldbereichen 25 zu erreichen, sind diese Bereiche tortenstückartig ausgebildet. Dazu sind die Prismenstrukturen 26, wie in Fig. 7b dargestellt, von Mittelpunkt zum Umfang hin kontinuierlich tiefer in das Material eingearbeitet, so daß ihre radiale Breite zum Mittelpunkt der Codescheibe 23 hin abnimmt.

Fig. 8 zeigt einen Querschnitt durch eine Prinzipdarstellung eines Maßstabes mit einem festen Glas-Kunststoffverbund. Vor allem in Linearmeßeinrichtungen wirken sich Differenzen zwischen den thermischen Ausdehnungskoeffizienten von Meßobjekt und Maßverkörperung ungünstig aus. Weil der Ausdehnungskoeffizient der Maßverkörperung durch das Material des Teilungsträgers bestimmt wird, werden für sehr kleine thermischen Ausdehnungskoeffizienten Teilungsträger aus Quarzglas oder Zerodur verwendet oder, um eine gute Anpassung an Stahl zu erreichen, spezielle Flintgläser.

Um einerseits eine kostengünstige Herstellung der erfindungsgemäßen Meßteilungsstrukturen in optischen Kunststoffen zu ermöglichen, aber anderseits auch einen niedrigen thermischen Ausdehnungskoeffizienten der Maßverkörperung zu erzielen, wird im Ausführungsbeispiel der Fig. 8 ein Maßstab aus einem festen Materialverbund zwischen einem Teilungsträger 27 aus kostengünstigen Borofloatglas mit einer Dicke von 2 mm und einem Meßteilungskörper 28 aus einer Polycarbonatschicht von 0,3 mm Dicke verwendet. Mittels eines speziell hergestellten Heißprägewerkzeuges werden im Teilungsträger 27 die Strukturen 29 auf handelsüblichen Heißprägemaschinen, wie sie beispielsweise von der Jenoptik AG, Jena, Deutschland, angeboten werden, hergestellt, wobei die eingangs geschilderten Dunkelfeldbereiche ausgebildet werden. Damit können mit einfachen und vor allem kostengünstigen Technologien sehr maßhaltige Maßverkörperungen in Form von Verbundmaßstäben oder -präzisionswinkelteilkreisen hergestellt werden.

In Figur 9 ist eine Weiterbildung der Maßverkörperung dargestellt, die verschmutzungsgeschützt ist. Setzen sich in den Prismenstrukturen transparente Schmutzpartikel wie Wasserdampf oder Öltröpfchen ab, so würden an den Grenzflächen der Prismenstrukturen die Bedingungen für die Totalreflexion gestört, und das Licht nicht definiert im Maßstab umgelenkt. Im Dunkelfeldbereich könnte dadurch störendes Fremdlicht entstehen. Aus diesem Grund sind die Prismenstrukturen mit einer Beschichtung, z.B. einem handelsüblichen lichtdichten Optiklack abgedeckt, und die Oberfläche des Teilungsträgers ist durch Aufbringen von Paßstücken 30 planarisiert. Der hochviskose Optiklack kann beispielsweise auf einfache Art eingerakelt werden. Alternativ kann er auch reflektierend ausgebildet sein. Er gewährleistet, daß die Totalreflexionsbedingungen erhalten bleiben. Durch die Planarisierung der Oberfläche ist vorteilhaft erreicht, daß störende Schmutzpartikel in deutlich geringerem Maße haften bleiben bzw. einfacher entfernt werden können.

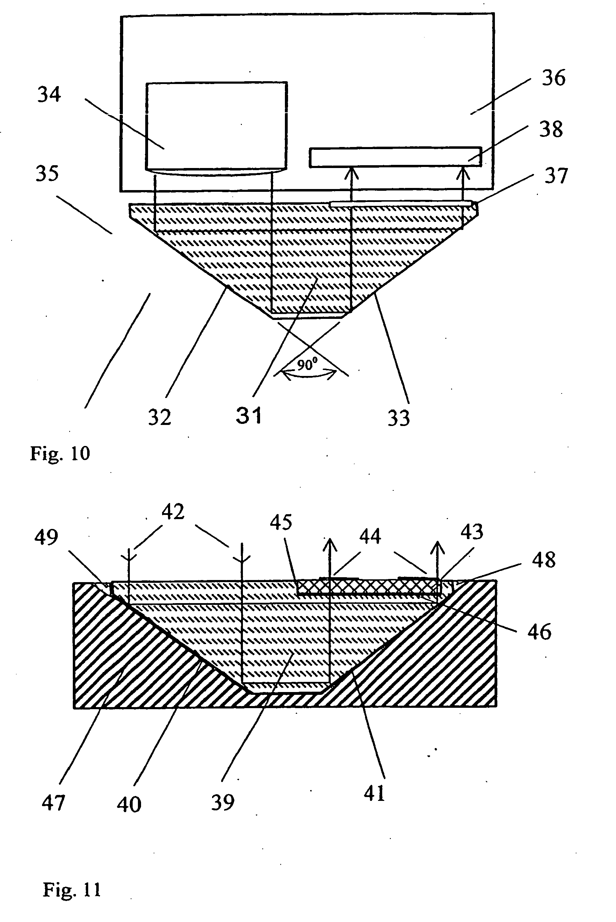

In vielen Applikationen, vor allem bei Linearmeßsystemen, stört oft die freie Anordnung des Maßstabes, wie sie für das Durchlichtverfahren erforderlich ist. Figur 10 zeigt eine Positionsmeßeinrichtung, die nach dem Durchlichtprinzip arbeitet, bei der aber dennoch die Anordnung von Beleuchtungseinheit und Abtastkopf auf derselben Seite des Maßstabs erfolgen kann, ähnlich dem Auflichtprinzip.

Als Teilungsträger 31 wird ein optisch transparentes Polyamid-Spritzgußteil verwendet, das über seine gesamte Längserstreckung zwei optisch reflektierende Reflexionsflächen 32 und 33 besitzt, die in einem Prismenwinkel von 90° zueinander liegen. Das von der Beleuchtungseinheit 34 der Abtasteinheit 36 ausgesandte parallele Licht trifft unter 45° auf die Reflexionsflächen 32 und wird um 90° abgelenkt und innerhalb des Teilungsträgers zu Reflexionsfläche 33 totalreflektiert. Auf diese trifft das Licht wiederum unter 45°, wird wiederum um 90° abgelenkt und gelangt so innerhalb des Teilungsträgers zu einer Meßteilungsstruktur 37, wie sie beispielsweise im Ausführungsbeispiel anhand der Fig. 2 und Fig. 3 beschrieben wurde. Eine Detektionseinheit 36 mit einem Photodiodenarray 38 detektiert die von der Meßteilungsstruktur transmittierte Strahlung und gibt positionsabhängige Meßsignale ab. Der Teilungsträger 31 der Maßverkörperung bewirkt somit eine Strahlumlenkung.

Optional ist auch eine einmalige Strahlumlenkung möglich, Detektionseinheit 3 und Photodiodenarray 38 liegen dann z. B. im 90°-Winkel zueinander.

Fig. 11 zeigt einen Querschnitt durch eine Maßverkörperung zum Einsatz im Positionsmeßverfahren nach Fig. 10. Vor allem bei großen Längen derartiger Maßverkörperungen ist zum einen die erforderliche Maßgenauigkeit mit optisch transparenten Kunststoffen nur schwer zu erreichen, weil der temperaturbedingte Meßfehler vor allem wegen des hohen thermischen Ausdehnungskoeffizienten des Kunststoffes nur schwer beherrschbar ist. Zum anderen ist aufgrund des geringen mechanischen Elastizitätsmoduls die erreichbare Meßgenauigkeit bei einer direkt in die Maßverkörperung geprägten Meßteilungsstruktur bei großen Längen nicht sehr hoch. Dies kann verbessert werden, indem ein separates Stützelement als Teilungsträger 39 aus einem optisch-transparenten Polyamid-Strangpreßprofil zum Einsatz kommt, der über seine gesamte Längserstreckung zwei optisch polierte Reflexionsflächen 40 und 41 besitzt. Der Teilungsträger 39 ist als Strangpreßprofil besonders kostengünstig auch in großen Längen herstellbar.

Die Reflexionsflächen 40 und 41 dieses Teilungsträgers 39 sind ebenfalls um einen Winkel von 90° gegeneinander geneigt. Das von der hier nicht dargestellten Beleuchtungseinheit ausgesandte Licht 42 trifft unter 45° auf die Reflexionsfläche 40, wird von dieser um 90° abgelenkt und innerhalb des Teilungsträgers zur Reflexionsfläche 41 totalreflektiert. Auf diese trifft das Licht 42 wiederum unter einem Winkel von 45°, wird um 90° abgelenkt und gelangt zu einem Glaskörper 43 mit einer an sich bekannten Chrom-Dünnfilmmeßteilungsstruktur 44. Zur Verbesserung des Lichtüberganges zwischen dem Teilungsträger 39 aus Polyamid und dem Glaskörper 43 befindet sich in der speziell für die Aufnahme des Glaskörperes 43 vorgesehenen Nut 45 als Immersionsflüssigkeit 46 eine dünne nichtflüchtige Silikonölschicht.

Zur Verbesserung der Eigenstabilität und zur Verringerung der thermischen Ausdehnung ist der Teilungsträger 39 mit einem speziellen Aufnahmeprofil 47 aus Stahl mit einem aushärtenden Kleber 48 verklebt.

## Patentansprüche

1. Maßverkörperung (1) für Positionsmeßsysteme, die als Amplitudengitter ausgebildet ist und eine Meßteilungsstruktur (3) aufweist, die Hellfeidbereiche (8) aufweist, in denen an der Maßverkörperung (1) eingestrahlte Strahlung (5) austritt, und Dunkelfeldbereiche (11), an denen eingestrahlte Strahlung (5) nicht austritt, wobei die Hellfeldbereiche (8) oder die Dunkelfeldbereiche (11) in einer Ebene liegen, **dadurch gekennzeichnet, daß** die Strahlung (5), die auf zumindest einen der beiden Bereiche trifft, durch mindestens eine Fläche (9 bzw. 10) reflektiert wird, die an der Maßverkörperung (1) ausgebildet ist und zu der Ebene geneigt ist, wobei die geneigte Fläche (9 bzw. 10) an Grenzflächen von V-förmigen Vertiefungen in der Maßverkörperung (1) gebildet is und die Vertiefungen untereinander und/oder in sich unterschiedlich tief sind.

2. Maßverkörperung (1) für Positionsmeßsysteme, die als Amplitudengitter ausgebildet ist und eine Meßteilungsstruktur (3) aufweist, die Hellfeidbereiche (8) aufweist, in denen an der Maßverkörperung (1) eingestrahlte Strahlung (5) austritt, und Dunkelfeldbereiche (11), an denen eingestrahlte Strahlung (5) nicht austritt, wobei die Hellfeldbereiche (8) oder die Dunkelfeldbereiche (11) in einer Ebene liegen, **dadurch gekennzeichnet, daß** die Strahlung (5), die auf zumindest einen der beiden Bereiche trifft, durch mindestens eine Fläche (9 bzw. 10) reflektiert wird, die an der Maßverkörperung (1) ausgebildet ist und zu der Ebene geneigt ist, wobei die geneigte Fläche (9 bzw. 10) an Grenzflächen von Vertiefungen in der Maßverkörperung (1) gebildet ist, die Prismenstruktur aufweisen und die Vertiefungen untereinander und/oder in sich unterschiedlich tief sind.

3. Maßverkörperung (1) nach einem der obigen Ansprüche, **dadurch gekennzeichnet, daß** die geneigte Fläche (9 bzw. 10) zur Totalreflektion der Strahlung (5) ausgebildet ist.

4. Meßverkörperung (1) nach einem der obigen Ansprüche, **dadurch gekennzeichnet, daß** zur Erzeugung einer Referenzmarkenstruktur mehrere Vertiefungen direkt anschließend nebeneinander angeordnet sind, so daß sich an der Oberfläche der Maßverkörperung (1) in der Längsansicht quer zur Bestrahlungsrichtung gesehen ein Zick-Zack-Profil ergibt.

5. Maßverkörperung (1) nach einem der obigen Ansprüche, **dadurch gekennzeichnet, daß** die Vertiefungen zur Planarisierung der Oberfläche der Maßverkörperung (1) mit Paßstücken (30) gefüllt sind, die gegenüber dem Material der Maßverkörperung (1) einen deutlichen Brechzahlunterschied aufweisen.

6. Maßverkörperung (1) nach einem der obigen Ansprüche, **dadurch gekennzeichnet, daß** die geneigte Fläche (9 bzw. 10) der Vertiefungen mit einer Beschichtung versehen ist.

7. Maßverkörperung (1) nach einem der obigen Ansprüche, **dadurch gekennzeichnet, daß** zur Erzeugung einer Absolutcodierung mehrere Spuren mit Hellfeld- und Dunkelfeldbereichen nebeneinander angeordnet sind.

## Claims

1. A gauge (1) for position measurement systems, which is provided as an amplitude grating and comprises a scale structure (3) including bright-field regions (8) where radiation (5) irradiated at the gauge (1) exits, and dark-field regions (11) where irradiated radiation (5) does not exit, said bright-field regions (8) or said dark-field regions (11) being located in one plane, **characterized in that** the radiation (5), which impinges on at least one of said two regions, is reflected by at least one surface (9 or 10, respectively), which is formed on the gauge (1) and is inclined relative to said plane, wherein the inclined surface (9 or 10, respectively) is formed at boundary surfaces of V-shaped grooves in the gauge (1) and the grooves have different depths among each other and/or within themselves.

2. A gauge (1) for position measurement systems, which is provided as an amplitude grating and comprises a scale structure (3) including bright-field regions (8) where radiation (5) irradiated at the gauge (1) exits, and dark-field regions (11) where irradiated radiation (5) does not exit, said bright-field regions (8) or said dark-field regions (11) being located in one plane, **characterized in that** the radiation (5), which impinges on at least one of said two regions, is reflected by at least one surface (9 or 10, respectively), which is formed on the gauge (1) and is inclined relative to said plane, wherein the inclined surface (9 or 10, respectively) is formed at boundary surfaces of grooves in the gauge (1), which grooves have a prism structure and different depths among each other and/or within themselves.

3. A gauge (1) according to any one of the above claims, **characterized in that** the inclined surface (9 or 10, respectively) is provided for total reflection of the radiation (5).

4. A gauge (1) according to any one of the above claims, **characterized in that**, in order to generate a reference mark structure, several grooves are arranged directly adjacent each other, resulting in a zigzag profile on the surface of the gauge (1) in a longitudinal view, seen transversely to the direction of irradiation.

5. A gauge (1) according to any one of the above claims, **characterized in that** the grooves are filled with fitting pieces (30) in order to planarize the surface of the gauge (1), the refractive indices of said fitting pieces (30) differing clearly from that of the material of the gauge (1).

6. A gauge (1) according to any one of the above claims, **characterized in that** the inclined surface (9 or 10, respectively) of the grooves is coated.

7. A gauge (1) according to any one of the above claims, **characterized in that** in order to generate an absolute code, several tracks including bright-field and dark-field regions are arranged next to each other.

## Revendications

1. Mesure matérialisée (1) pour des systèmes de mesure de position, qui est conçue comme grille d'amplitude et présente une structure à division de mesure (3), laquelle présente des zones de champ clair (8), desquelles sort un rayonnement (5) entré sur la mesure matérialisée (1), et des zones de champ obscur (11), sur lesquelles le rayonnement (5) entré ne sort pas, les zones de champ clair (8) ou les zones de champ obscur (11) se situant dans un plan, **caractérisée en ce que** le rayonnement (5), qui arrive sur au moins l'une des deux zones, est réfléchi par au moins une surface (9 ou 10), qui est réalisée sur la mesure matérialisée (1) et est inclinée par rapport au plan, la surface (9 ou 10) inclinée étant formée sur des surfaces limites de cavités en V dans la mesure matérialisée (1) et les cavités ont une profondeur différente les unes par rapport aux autres et/ou individuellement.

2. Mesure matérialisée (1) pour des systèmes de mesure de position, qui est conçue comme grille d'amplitude et présente une structure à division de mesure (3), laquelle présente des zones de champ clair (8), dans lesquelles sort un rayonnement (5) entré sur la mesure matérialisée (1), et des zones de champ obscur (11), sur lesquelles le rayonnement (5) entré ne sort pas, les zones de champs claires (8) ou les zones de champ obscur (11) se situant dans un plan, **caractérisée en ce que** le rayonnement (5), qui arrive sur au moins l'une des deux zones, est réfléchi par au moins une surface (9 ou 10), qui est réalisée sur la mesure matérialisée (1) et est inclinée par rapport au plan, la surface (9 ou 10) inclinée étant formée sur des surfaces limites de cavités dans la mesure matérialisée (1), lesquelles présentent une structure de prisme et qui présente une profondeur différente les unes par rapport aux autres et/ou individuellement.

3. Mesure matérialisée (1) selon l'une des revendications précédentes, **caractérisée en ce que** la surface (9 ou 10) inclinée est conçue pour la réflexion totale du rayonnement (5).

4. Mesure matérialisée (1) selon l'une des revendications précédentes, **caractérisée en ce que**, pour générer une structure de marquage de référence, plusieurs cavités sont disposées directement les unes à côté des autres, de sorte qu'on obtienne un profil en zigzag sur la surface de la mesure matérialisée (1), dans la vue longitudinale, transversalement au sens de rayonnement.

5. Mesure matérialisée (1) selon l'une des revendications précédentes, **caractérisée en ce que** les cavités sont remplies avec des pièces ajustées (30) pour l'aplanissement de la surface de la mesure matérialisée (1) qui présentent une nette différence d'indice de réfraction par rapport au matériau de la mesure matérialisée (1).

6. Mesure matérialisée (1) selon l'une des revendications précédentes, **caractérisé en ce que** la surface inclinée (9 ou 10) des cavités est dotée d'un revêtement.

7. Mesure matérialisée (1) selon l'une des revendications précédentes, **caractérisé en ce que**, pour générer un codage absolu, plusieurs pistes avec des zones de champ clair et de champ foncé sont disposées les unes à côté des autres.
